# EUROPEAN PATENT APPLICATION

(11) **EP 2 664 598 A1**
(43) Date of publication of application: **20.11.2013**
(21) Application number: 13166094.6
(22) Date of filing: 30.04.2013
(51) Int. Cl.: C04B 33/13, C04B 33/132, F41J 1/01, F41J 9/00

(54) **Composition for preparing environmentally friendly target and environmentally friendly target**

(30) Priority: 18.05.2012 EE 201200009
(71) Applicant: Green Clay Manufacturing OÜ, 11415 Tallinn (EE)
(72) Inventor: Romanov, Raido, 45106 Tapa (EE)
(74) Representative: Sarap, Margus

(57) **Abstract**

Composition for preparing an environmentally friendly target which comprises a homogeneous mass of filler and binder previously mixed and heated. Homogeneous mass is fed straight into moulds or processed into granules and are then fed into the mould as granules and pressed into targets in the moulds. The moulded targets are cooled and removed from the moulds. For example stearic acid, stearic wax, other natural waxes and solidifying and degradable materials of natural origin with a melting point over 30°C can be used as a binder. Fine fraction materials with a melting point over 30°C, e.g. calcium carbonate, clinker dust, dolomite dust, can be used as filler. Colouring agents are added in the mixing step to change the colour.

## Description

### TECHNICAL FIELD

This invention relates to the field of targets used in shooting sports, compositions used for preparing the target and preparation technologies of targets.

### STATE OF THE ART

The state of the art knows targets prepared from oil distillates, coal tar, different synthetic resins and fillers which do not decompose in nature and include substances harmful to the environment. The closest solutions to the present invention are targets made of clay by cold-pressing method without firing which have been described for example in patent application WO9507245 and patent US5649707. The disadvantage of such not fired targets is that the requirements set for mechanical strength and fragility are not achieved. It means that such targets are not strong enough not to break when flying out of the machine and they are not fragile enough due to the used binders that they would break when getting hit by shots. Another disadvantage is that the stable quality of known targets is difficult to guarantee in industrial level and therefore they do not exit properly from the ejection device.

Clay is also used in the preparation of general targets. The percent of defective works of such targets is high and the targets are in various sizes, that is why they do not fly out of the machine properly.

Another problem with known targets is that they turn sticky and get softer in warm conditions, that is why they are not fragile which is necessary for disintegration when getting hit by a shot.

The biggest problem with using the targets known from the state of the art is the contamination and environmental harmfulness. Due to the fact cleaning up the pieces of shot targets at firing ranges is expensive and time-consuming, the pieces of targets contaminate the soil and environment due to used components which do not degrade in the nature.

### SUMMARY OF THE INVENTION

The purpose of the present invention is to provide a solution for the preparation of biodegradable environmentally friendly targets and a target which compared to known solutions is environmentally friendly, degrades in nature, has better mechanical characteristics, is fragile enough and has a more stable flying trajectory. Due to the natural materials used to prepare the targets, an additional purpose of this invention is the regulation of the acidity of the soil at firing ranges. Thanks to the use of environmentally friendly and biodegradable materials and the characteristics of regulating the acidity of the soil, the natural and environmental damages related to the shooting sports are decreased.

In order to achieve the purpose of the invention, environmentally friendly components are used in the preparation of targets, e.g. mixture of fatty acids of plant and/or animal origin or other biodegradable raw materials where necessary mechanical characteristics are achieved by components and the target.

The target of this invention is suitable to be used by hobby marksmen as well as by professional athletes in workouts and in different level competitions all the way up to the Olympic Games.

The composition according to the present invention can be used to prepare all types of targets with standard dimensions and weight approved by International Shooting Sport Federation (e.g. mini, midi, rabbit, battue, flash, standard) as well as targets with special dimensions.

### DETAILED DESCRIPTION OF THE INVENTION

The composition according to the present invention for preparing an environmentally friendly target comprises raw material which has been made of a binder and filler and in an alternative embodiment of the invention additionally comprises at least of one extra component.

Natural substances with a melting point over 30°C and particulates granulometry up to 5 mm (for example stearic acid, stearic wax, bee wax, palmitic acid, binder obtained by saponifying animal or vegetable fats, mixtures of residual fatty acids and others, depending on the origin and quality of the raw material, natural waxes and solidifying and degradable materials of natural origin) can be used as a binder.

As a filler natural and environmentally harmless bulk substances have been used for blending with sufficiently fine fraction granulometry in the range 1-1000 µm, preferably in the range 1-125 µm (e.g. when using limestone and/or clinker dust), most preferably 89 µm.

For example wood ash, peat, fertilisers, silicate compounds, limestone, calcium carbonate, clinker dust, dolomite dust, oil shale dust or other natural solid fine fraction materials with a melting point over 30°C have been used as a filler for regulating the acidity of soil.

Depending on the type of the target, the sizes of volume portions of raw materials used for the preparation of target in mass percentages are in the range 10 % to 50 % of binder and 50 % to 90 % of filler, preferably 13 % to 27 % of binder and 73 % to 87 % of filler, more preferably 14 % to 17 % of binder and 83 % to 86 % of filler.

In different embodiments the target according to the present invention comprises in mass percentages e.g. a) 17 % of binder and 83 % of filler, b) 15 % of binder and 85 % of filler, c) up to 20 % of binder, up to 50% of binder, depending on the type of the target.

In an alternative embodiment of the invention at least one extra component has been added to the mass of binder and filler. For example different colouring agents and/or additional natural substances regulating the pH of the soil have been used as extra components.

Depending on the need to regulate the pH of the soil of the place of use of target, the filler of the composition used for the preparation of the target has been chosen according to the fact whether the basicity or acidity of soil is to be regulated. For example acid filler (e.g. peat, clinker dust, wood ash, oil shale dust, etc) is used with too basic soil, and if acidity needs to be decreased then basic filler is used (e.g. calcium carbonate, etc).

The composition according to the present invention is used to prepare environmentally friendly targets e.g. by a method comprising the following steps:
- Filler and binder are used for the preparation of raw material.
- Raw material is pretreated by heating and mixing.
- Moulds are lubricated, if necessary.
- Raw material mass is fed into the moulds.
- The targets are formed by pressing.
- The formed targets are compressed and the raw material residues are removed.
- The targets are cooled.
- The cooled targets are separated and removed from the mould.

In the pretreatment of raw material the binder and filler are heated and mixed in a mixer into a homogeneous mass at 68°C to 95°C up to 240 minutes, preferably up to 90 minutes.

Upon the melting of binder the binder is kept at a liquid state until homogeneous blending with the filler. Upon mixing the raw materials the homogeneity of the entire raw material is guaranteed, which in turn is a basis for preparing uniformly qualitative targets.

After mixing and heating the raw materials the composition which is mixed into a homogeneous mass is directed to the press mould in liquid state and targets with determined weight are pressed from the composition (e.g. in hot-pressing). In order to avoid the deformations caused by the cooling of raw material, the raw material is cooled in a press mould 1-600 seconds depending on the technical specifications of the used binder. The formed composition is used up within 1.5 hours. Upon pressing at a pressure up to 1500 kg/cm² the raw material is shaped as a target, the raw material composition is compressed until all the mould parts are filled. Upon pressing more pressure is applied to the moulds to achieve a greater mechanical strength.

The raw material residues are removed by one-time pressing at a pressure of 1500 kg/cm². If necessary, a colour container is added to the target on the second pressing. The pressure of the pressing depends on the raw material composition and the pressing speed.

In order to provide necessary pressure to the moulds, different pressing systems are used - mechanical press (e.g. die) with a bed that moves horizontally or circularly, mechanical press with a rotating drum which is based on the principle of Maltese cross, hydraulic, pneumohydraulic or pneumopress.

Inertia-based mouth part is used for filling moulds where the time of the filling of moulds depends on the gravity and flowability of the mass or a system is used where pressurized composition that is controlled by the temperature is sprayed into the mould by a solution where filling aperture is opened and closed with the composition dosage valve that is controlled by automatics. The usage of composition dosage valve allows filling the moulds without dripping which accelerates the mould filling process. The mould is filled approximately 0.1-10 seconds thanks to the pressurized composition and composition dosage valve. In comparison with known devices which prepare targets up to 3000 pcs per hour, the present device prepares targets approximately up to 9000 pcs per hour.

In an alternative embodiment of the invention the composition is cooled after mixing, then granulated and granules are used as a raw material of the target. In this embodiment the feed of press is separate, e.g. a heating extruder in which granules are melted in the given temperature and liquid mass is formulated.

The moulds are lubricated, if necessary, depending on the binder (in order to avoid the sticking of target to the moulds) with natural lubricant, e.g. esterificated vegetable oil.

After cooling the pressed target is removed from the mould e.g. by compressed air and transported from the press either by mechanical claws or suction devices to avoid changing the shape of the target.

The moulds used in the pressing step of this method are formed according to the target type taking into account the characteristics of raw material. In the preparation of moulds it is observed that there are no negative corners in the mould profile that would cause the pressed target to get stuck in the mould. The moulds are centralised with regard to each other as accurately as possible which guarantees a homogeneous distribution of composition between the moulds and a homogeneous (balanced) weight distribution of target as well as a stable flying trajectory.

## Claims

1. A composition for preparing an environmentally friendly target comprising raw material which comprises a binder and a filler, **characterised in that** the binder comprises natural biodegradable substances with a melting point over 30°C and the filler comprises natural biodegradable fine fraction bulk substances with a melting point over 30°C and the content of binder in mass percentage is in the range 10 % to 50 % and the content of filler in mass percentage is in the range 50 % to 90 %.

2. The composition according to claim 1, **characterised in that** the composition comprises acid filler.

3. The composition according to claim 1, **characterised in that** the composition comprises basic filler.

4. The composition according to claim 1, **characterised in that** the binder is stearic acid, stearic wax, bee wax, palmitic acid, binder obtained by saponifying animal or vegetable fats and/or mixture of residual fatty acids and the filler is wood ash, peat, fertiliser, silicate compounds, limestone, calcium carbonate, clinker dust, dolomite dust and/or oil shale dust.

5. The composition according to claim 1, **characterised in that** the composition comprises basic binder with granulometry up to 5 mm and filler with a granulometry in the range 1 µm-1,000 µm.

6. The composition according to claim 1, **characterised in that** at least one extra component has been added to the composition.

7. The composition according to claim 1, **characterised in that** the binder content in mass percentage is in the range 13 % to 27 % and filler content in mass percentage is in the range 73 % to 87 %.

8. An environmentally friendly target formed of a composition which comprises a binder and a filler, **characterised in that** the binder comprises natural biodegradable substances with a melting point over 30°C and the filler comprises natural biodegradable fine fraction bulk substances with a melting point over 30°C and the content of binder in mass percentage is in the range 10 % to 50 % and the content of filler in mass percentage is in the range 50 % to 90 %.

9. The environmentally friendly target according to claim 8, **characterised in that** the target comprises acid filler.

10. The environmentally friendly target according to claim 8, **characterised in that** the target comprises basic filler.

11. The environmentally friendly target according to claim 8, **characterised in that** the binder is stearic acid, stearic wax, bee wax, palmitic acid, binder obtained by saponifying animal or vegetable fats and/or mixture of residual fatty acids and the filler is wood ash, peat, fertiliser, silicate compounds, limestone, calcium carbonate, clinker dust, dolomite dust and/or oil shale dust.

12. The environmentally friendly target according to claim 8, **characterised in that** granulometry of binder is up to 5 mm and granulometry of filler is in the range 1 µm-1,000 µm.

13. The environmentally friendly target according to claim 8, **characterised in that** the binder content in mass percentage is in the range 13 % to 27 % and the filler content in mass percentage is in the range 73 % to 87 %.

14. The environmentally friendly target according to claim 8, **characterised in that** the target is formed of raw material which comprises filler, a binder and at least one extra component.

15. The environmentally friendly target according to claim 8, **characterised in that** a colour container has been added to the target.
